# EUROPÄISCHE PATENTSCHRIFT

(11) **EP 1 671 195 B1**
(45) Veröffentlichungstag und Bekanntmachung des Hinweises auf die Patenterteilung: **27.01.2010**
(21) Anmeldenummer: 03762490.5
(22) Anmeldetag: 13.06.2003
(51) Int. Cl.: G05D 1/02

(54) **BODENBEARBEITUNGSSYSTEM**
FLOOR TREATMENT SYSTEM
SYSTEME DE TRAITEMENT DE SOL

(30) Priorität: 08.07.2002 DE 10231391
(43) Veröffentlichungstag der Anmeldung: 21.06.2006
(73) Patentinhaber: Alfred Kärcher GmbH & Co. KG, 71364 Winnenden (DE)
(72) Erfinder: DIEHL, Ralph, 73666 Baltmannsweiler (DE); KEPPLER, Joachim, 71364 Winnenden (DE); SKOUMAL, Roger, 71404 Korb (DE); BENZLER, Gottfried, 71737 Kirchberg (DE)
(74) Vertreter: Karrais, Martin
(86) Internationale Anmeldenummer: PCT/EP2003/006225
(87) Internationale Veröffentlichungsnummer: WO 2004/006034

(56) Entgegenhaltungen:
- EP-A- 0 307 381
- EP-A- 1 172 719
- US-B1- 6 389 329
- PATENT ABSTRACTS OF JAPAN vol. 008, no. 089 (P-270), 24. April 1984 (1984-04-24) & JP 59 005315 A (HITACHI SEISAKUSHO KK), 12. Januar 1984 (1984-01-12)

## Beschreibung

Die Erfindung betrifft ein Bodenbearbeitungssystem mit einer selbstfahrenden und selbststeuernden Bodenbearbeitungseinheit, die ein elektrisch angetriebenes Bodenbearbeitungsaggregat sowie eine wiederaufladbare Energieversorgungseinheit umfaßt, und mit einer zentralen Ladestation zum Wiederaufladen der Energieversorgungseinheit, wobei die Ladestation eine Sendevorrichtung zum Aussenden einer infraroten Zielstrahlung aufweist, und wobei die Zielstrahlung von einer Empfangsvorrichtung der Bodenbearbeitungseinheit richtungsabhängig erfaßbar ist zum selbsttätigen Ausrichten und Positionieren der Bodenbearbeitungseinheit an der Ladestation.

Mittels derartiger Bodenbearbeitungssysteme kann eine Bodenfläche bearbeitet, insbesondere gereinigt werden, ohne daß es hierzu erforderlich ist, daß eine Bedienungsperson die Bodenbearbeitungseinheit an der zu bearbeitenden Bodenfläche entlang führt. Stattdessen ist die Bodenbearbeitungseinheit derart ausgestaltet, daß sie selbsttätig entsprechend einem vorgebbaren Steuerprogramm an der zu bearbeitenden Bodenfläche entlang fährt und hierbei mittels des Bodenbearbeitungsaggregates die Bodenfläche bearbeitet. Zur Energieversorgung weist die Bodenbearbeitungseinheit eine wiederaufladbare Energieversorgungseinheit auf, die sich während der Bearbeitung der Bodenfläche allmählich entlädt. Der Ladezustand der Energieversorgungseinheit wird von einer elektrischen Steuerung der Bodenbearbeitungseinheit überwacht, und bei Unterschreiten eines unteren Grenzwertes des Ladezustandes steuert die Bodenbearbeitungseinheit selbsttätig die zugeordnete zentrale Ladestation an, die eine Energiequelle aufweist zum Wiederaufladen der Energieversorgungseinheit. Nach erfolgtem Wiederaufladen kann dann die Bodenbearbeitungseinheit die Bearbeitung der Bodenfläche fortsetzen.

Um sicherzustellen, daß die mobile Bodenbearbeitungseinheit den Weg zur zentralen Ladestation findet und diese selbsttätig ansteuern und sich an dieser positionieren kann, wird von der Sendevorrichtung der Ladestation eine infraroten Zielstrahlung ausgesendet. Bei ihrer Fahrt entlang der Bodenfläche kommt die Bodenbearbeitungseinheit in den Bereich der Zielstrahlung, die von einer Empfangsvorrichtung der Bodenbearbeitungseinheit richtungsabhängig erfaßt wird, so daß sich diese aufgrund der empfangenen Zielstrahlung ausrichten und die Ladestation ansteuern kann. Es hat sich gezeigt, daß die Ausrichtung und Positionierung der Bodenbearbeitungseinheit nicht in allen Fällen zuverlässig erfolgt.

Aus der EP 11 72 719 A1 ist ein Bodenbearbeitungssystem mit einer selbst fahrenden und selbst steuernden Bodenbearbeitungseinheit und einer zentralen Ladestation bekannt, wobei von der zentralen Ladestation mittels einer ersten Sendeeinheit eine erste, breit verteilte Zielstrahlung und mittels einer zweiten Sendeeinheit eine zweite, fokusierte Zielstrahlung erzeugt werden kann. Die zweite Zielstrahlung erstreckt sich nur über einen kurzen Bereich und dient der Ausrichtung der Bodenbearbeitungseinheit an der Ladestation, während die erste Zielstrahlung weiter reicht und breit verteilt ist.

Aufgabe der vorliegenden Erfindung ist es, ein Bodenbearbeitungssystem der eingangs genannten Art derart weiterzubilden, daß die zentrale Ladestation, selbst bei größerer Entfernung von der Bodenbearbeitungseinheit zuverlässig angesteuert werden kann.

Diese Aufgabe wird bei einem Bodenbearbeitungssystem der gattungsgemäßen Art erfindungsgemäß dadurch gelöst, daß die Sendevorrichtung eine erste Sendeeinheit zur Ausbildung eines Fernfeldes der Zielstrahlung sowie eine zweite Sendeeinheit zur Ausbildung eines Nahfeldes der Zielstrahlung aufweist, wobei sich das Nahfeld ausgehend von der Ladestation über einen breiteren und kürzeren Bereich erstreckt als das Fernfeld.

Erfindungsgemäß wird das Strahlungsfeld der Zielstrahlung durch Ausbildung eines Fernfeldes und eines Nahfeldes erzeugt, wobei zwei verschiedene Sendeeinheiten zum Einsatz kommen. Die erste Sendeeinheit dient hierbei der Erzeugung eines Fernfelds der Zielstrahlung, d. h. die gesamte Sendeenergie der ersten Sendeeinheit wird dem Fernfeld bereitgestellt. Mittels der zweiten Sendeeinheit wird ein Nahfeld der Zielstrahlung erzeugt, das sich über einen kürzeren und breiteren räumlicheren Bereich erstreckt als das Fernfeld. Die von der zweiten Sendeeinheit bereitgestellte Sendeenergie wird also über einen breiteren Bereich verteilt als die von der ersten Sendeeinheit bereitgestellte Sendeenergie für das Fernfeld. Es hat sich gezeigt, daß durch eine derartige Ausgestaltung des Strahlungsfeldes der Zielstrahlung sichergestellt werden kann, daß die zentrale Ladestation von der Bodenbearbeitungseinheit zuverlässig angesteuert werden kann. Bei seiner Fahrt entlang der zu bearbeitenden Bodenfläche trifft die Bodenbearbeitungseinheit selbst bei großer räumlicher Entfernung von der Ladestation in zeitlichen Abständen immer wieder in den Bereich des Fernfeldes, da sich dieses verglichen mit dem Nahfeld zwar über einen verhältnismäßig schmalen, dafür aber weitreichenden Bereich erstreckt. Unterschreitet der Ladezustand der Energieversorgungseinheit der Bodenbearbeitungseinheit einen unteren Grenzwert und trifft die Bodenbearbeitungseinheit in diesem Zustand in den Bereich des Nah- oder Fernfeldes, so richtet sie sich daraufhin in Richtung der zentralen Ladestation aus und steuert diese an. Das verhältnismäßig breite Nahfeld erleichtert hierbei die Orientierung der Bodenbearbeitungseinheit, während das weitreichende Fernfeld selbst in großer Entfernung zur Ladestation eine Ausrichtung der Bodenbearbeitungseinheit ermöglicht.

Als besonders vorteilhaft hat sich eine keulenförmige Ausgestaltung des Fernfeldes erwiesen. Das Fernfeld weist hierbei eine Symmetrieachse auf, die vorzugsweise bezogen auf die Horizontale schräg nach unten ausgerichtet ist. So kann beispielsweise vorgesehen sein, daß die Symmetrieachse unter einem Winkel von ca. 0,5° bis etwa 2°, insbesondere unter einem Winkel von 1° zur Horizontalen nach unten geneigt ist. Der Öffnungswinkel des keulenförmigen Fernfeldes bezogen auf dessen Symmetrieachse beträgt bei einer vorteilhaften Ausgestaltung ca. 3° bis ca. 8°, insbesondere etwa 4° bis 5°, beispielsweise 4,5°. Die Reichweite des Fernfeldes kann hierbei beispielsweise 8m bis 12m betragen.

Bei einer besonders bevorzugten Ausführungsform des erfindungsgemäßen Bodenbearbeitungssystemes weist die erste Sendeeinheit mindestens zwei Sendeelemente auf, deren ausgesandte Infrarotstrahlung sich gegenseitig überlagert. Die Sendeenergie der ersten Sendeeinheit wird folglich von mindestens zwei Sendeelementen bereitgestellt, wobei sich das Fernfeld durch Überlagerung der von den beiden Sendeelementen ausgesandten Strahlungsfeldern ergibt. Das Fernfeld kann dadurch eine hohe Energiedichte aufweisen.

Vorzugsweise ist den Sendeelementen der ersten Sendeeinheit zumindest ein optisches Element zur Strahlführung zugeordnet. Hierbei kann vorgesehen sein, daß die den einzelnen Sendeelementen zugeordneten optischen Elemente einstückig miteinander verbunden sind. Die Montage der ersten Sendeeinheit wird dadurch erheblich vereinfacht.

Als günstig hat es sich erwiesen, wenn das Nahfeld zumindest zwei nebeneinander angeordnete Feldbereiche aufweist.

Hierbei ist es von besonderem Vorteil, wenn die einzelnen Feldbereiche des Nahfeldes keulenförmig ausgestaltet sind und jeweils eine Symmetrieachse aufweisen. Als günstig hat es sich erwiesen, wenn die keulenförmigen Feldbereiche spiegelsymmetrisch zur Symmetrieachse des Fernfeldes ausgerichtet sind.

So kann beispielsweise vorgesehen sein, daß die keulenförmigen Feldbereiche bezogen auf ihre jeweilige Symmetrieachse einen Öffnungswinkel von ca. 10° bis etwa 20°, insbesondere ca. 15° aufweisen. Die keulenförmige Feldbereiche des Nahfeldes können unter einem Winkel von etwa 3° bis ca. 8° vorzugsweise 5° zur Horizontalen schräg nach unten geneigt sein.

Bei einer bevorzugten Ausgestaltung sind die Symmetrieachsen von zwei Feldbereichen des Nahfeldes spiegelsymmetrisch in einem Winkel von ca. ± 10° bis etwa ± 20°, insbesondere in einem Winkel von etwa ± 15°, zur Symmetrieachse des Fernfeldes geneigt. Die beiden Feldbereiche des Nahfeldes sind bei einer derartigen Ausgestaltung schräg zur Symmetrieachse des Fernfeldes ausgerichtet, so daß das Nahfeld insgesamt einen breiteren Bereich überdeckt als das Fernfeld.

Günstig ist es, wenn die zweite Sendeeinheit zumindest zwei Sendeelemente aufweist, wobei die von den Sendeelementen ausgesandte Infrarotstrahlung in unterschiedliche Richtungen gerichtet ist. Das Nahfeld ergibt sich folglich durch das Zusammenwirken von mindestens zwei Sendeelementen, deren Infrarotstrahlung in unterschiedliche Richtungen, vorzugsweise spiegelsymmetrisch zur Symmetrieachse des Fernfeldes ausgerichtet ist.

Vorzugsweise bildet die von den Sendeelementen der zweiten Sendeeinheit ausgesandte Infrarotstrahlung jeweils einen Feldbereich des Nahfeldes aus, d. h. jedem Feldbereich des Nahfeldes ist ein separates Sendeelement der zweiten Sendeeinheit zugeordnet.

Die Sendeelemente der ersten und/oder zweiten Sendeeinheit sind bei einer bevorzugten Ausführungsform als infrarotlichtemittierende Dioden ausgestaltet. Dies ermöglicht eine kostengünstige Herstellung der Sendevorrichtungen.

Zur Vereinfachung der Montage der Sendevorrichtungen ist es günstig, wenn die infrarotlichtemittierenden Dioden parallel zueinander ausgerichtet sind, wobei den Dioden jeweils ein optisches Element vorgeschaltet ist zur Fokusierung und/oder Umlenkung der emittierten Infrarotstrahlung. Hierbei wird eine weitere Vereinfachung der Montage dadurch erzielt, daß zumindest einige der optischen Elemente einstückig miteinander verbunden sind. So kann beispielsweise vorgesehen sein, daß die optischen Elemente der ersten und der zweiten Sendeeinheit jeweils einstückig miteinander verbunden sind. Vorzugsweise sind die optischen Elemente aus einem Kunststoffmaterial gefertigt.

Bei einer besonders bevorzugten Ausführungsform weist die Ladestation eine dritte Sendeeinheit auf zur Ausbildung eines Führungsfeldes der Zielstrahlung zur Führung der Bodenbearbeitungseinheit beim Andocken an die Ladestation. Eine derartige Ausgestaltung hat den Vorteil, daß die Führung der Bodenbearbeitungseinheit in dem der Ladestation unmittelbar benachbarten Bereich mittels der von einer dritten Sendeeinheit bereitgestellten Infrarotstrahlung erfolgen kann. Da sich die Bodenbearbeitungseinheit in diesem Falle nur in kurzem Abstand zur Ladestation befindet, ist für die dritte Sendeeinheit nur eine verhältnismäßig geringe Sendeenergie erforderlich.

Der Einsatz einer dritten Sendeeinheit zur Führung der Bodenbearbeitungseinheit in dem der Ladestation unmittelbar benachbarten Bereich hat außerdem den Vorteil, daß die ersten und zweiten Sendeeinheiten zur Erzielung einer verhältnismäßig großen Reichweite in einem bezogen auf die Vertikale oberen Bereich der Ladestation angeordnet sein können, während die dritte Sendeeinheit einer Andockstelle der Ladestation, an der die Bodenbearbeitungseinheit zum Wiederaufladen der Energieversorgungseinheit zur Anlage kommt, unmittelbar benachbart angeordnet sein kann.

Die dritte Sendeeinheit umfaßt vorzugsweise ein einziges Sendeelement, wobei beim Andocken der Bodenbearbeitungseinheit an die Ladestation eine Sichtverbindung zwischen dem Sendeelement und der Empfangsvorrichtung besteht. Durch die Positionierung des Sendeelementes der dritten Sendeeinheit dergestalt, daß beim Andocken der Bodenbearbeitungseinheit eine Sichtverbindung besteht, wird auf konstruktiv einfache Weise sichergestellt, daß die Andockstelle der Ladestation von der Bodenbearbeitungseinheit zuverlässig angesteuert werden kann.

Als Sendeelement kann für die dritte Sendeeinheit eine infratrotlichtemittierende Diode zum Einsatz kommen.

Die Empfangsvorrichtung der Bodenbearbeitungseinheit weist bei einer bevorzugten Ausführungsform zumindest zwei im Abstand zueinander angeordnete, infrarotlichtempfndliche Sensoren auf. Bevorzugt sind die beiden Sensoren schräg zueinander ausgerichtet, insbesondere unter einem Winkel von 120°. Günstig ist es, wenn den Sensoren jeweils ein optisches Element zur Strahlführung und/oder Fokusierung zugeordnet ist, so daß sich der infrarotlichtempfindliche Bereich der Sensoren in horizontaler Richtung über einen Winkelbereich von mehr als 180° erstreckt.

Von besonderem Vorteil ist es, wenn die Empfangsvorrichtung vier infrarotlichtempfindliche Sensoren aufweist, wobei zwei Sensoren in Hauptbewegungsrichtung nach vorne und zwei Sensoren entgegen der Hauptbewegungsrichtung nach hinten gerichtet sind. Dies hat den Vorteil, daß die Sensoren selbst für Infrarotstrahlung empfindlich sind, die aus einem bezogen auf die Hauptbewegungsrichtung der Bodenbearbeitungseinheit rückwärtigen Bereich auf die optischen Elemente auftrifft. Die beiden nach vorne gerichteten Sensoren sind bevorzugt in einem mittigen Bereich der mobilen Bodenbearbeitungseinheit angeordnet. Besonders günstig ist es, wenn die beiden nach vorne gerichteten Sensoren schräg zueinander ausgerichtet sind, vorzugsweise stehen die beiden nach vorne gerichteten Sensoren unter einem Winkel von 120° zueinander.

Bei einer besonders bevorzugten Ausführungsform ist vorgesehen, daß die Empfangsvorrichtung zwei infrarotlichtempfindliche Sensoren aufweist, die jeweils im Bereich oberhalb eines Antriebrades der Bodenbearbeitungseinheit angeordnet, insbesondere der Hauptbewegungsrichtung entgegen gerichtet sind. Es hat sich gezeigt, daß durch eine derartige Anordnung der Sensoren die Empfangsvorrichtung eine hohe richtungsabhängige Empfindlichkeit für Infrarotstrahlung erhält. Die beiden Sensoren weisen hierbei einen verhältnismäßig großen Abstand zueinander auf und sind jeweils in einem äußeren Bereich der Bodenbearbeitungseinheit positioniert. Wird von einem der Sensoren Infrarotlicht empfangen, so kann sich die Bodenbearbeitungseinheit selbsttätig derart drehen und zur Zielstrahlung ausrichten, daß zwei nach vorne gerichtete Sensoren das Infrarotlicht mit gleicher Intensität empfangen und die Bodenbearbeitungseinheit der Zielstrahlung folgen kann.

Wie eingangs erwähnt, kann mittels der Bodenbearbeitungseinheit eine Bodenfläche insbesondere gereinigt werden. Hierzu ist bei einer besonders bevorzugten Ausführungsform des erfindungsgemäßen Bodenbearbeitungssystems vorgesehen, daß die Bodenbearbeitungseinheit ein Sauggerät ausbildet mit einem einen Saugeinlaß aufweisenden Schmutzsammelbehälter und einer Saugturbine, und daß die zentrale Ladestation ein Absaugaggregat sowie ein Schmutzaufnahmebehälter aufweist, wobei der Schmutzsammelbehälter über den Saugeinlaß vom Absaugaggregat absaugbar und gleichzeitig die Energieversorgungseinheit von der Ladestation wiederaufladbar ist. Mittels eines derartig ausgestalteten Bodenbearbeitungssystems kann eine Bodenfläche zuverlässig abgesaugt werden, wobei während des Normalbetriebes der Bodenbearbeitungseinheit von der Saugturbine eine Saugströmung hervorgerufen wird, so daß von der Bodenfläche Schmutz aufgenommen und über den Saugeinlaß in den Schmutzsammelbehälter überführt werden kann. Der Antrieb der Saugturbine erfolgt hierbei mittels eines Elektromotors, der an eine wiederaufladbare Energieversorgungseinheit angeschlossen ist. Unterschreitet der Ladezustand der Energieversorgungseinheit einen vorgegebenen Grenzwert, so steuert die Bodenbearbeitungseinheit wie voranstehend erläutert die zentrale Ladestation an, so daß die Energieversorgungseinheit wieder aufgeladen werden kann. Gleichzeitig wird während des Ladevorganges der Schmutzsammelbehälter der Bodenbearbeitungseinheit entleert. Hierzu umfaßt die zentrale Ladestation ein Absaugaggregat, das während des Ladevorganges eine Absaugströmung hervorruft, so daß der im Schmutzsammelbehälter befindliche Schmutz über den Saugeinlaß abgesaugt und in den Schmutaufnahmebehälter der Ladestation überführt werden kann.

Die Ladestation umfaßt bei einer bevorzugten Ausführungsform eine Absaugöffnung, die beim Andocken der Bodenbearbeitungseinheit fluchtend zum Saugeinlaß der Bodenbearbeitungseinheit ausgerichtet ist. So kann vorgesehen sein, daß die Ladestation eine Rampe umfaßt, an der die Absaugöffnung angeordnet ist, wobei die Bodenbearbeitungseinheit beim Andocken an die zentrale Ladestation auf die Rampe fährt, so daß der an einer Bodenwand der Bodenbearbeitungseinheit positionierte Saugeinlaß fluchtend zur Absaugöffnung positionierbar ist.

Die nachfolgende Beschreibung einer bevorzugten Ausführungsform der Erfindung dient im Zusammenhang mit der Zeichnung der näheren Erläuterung. Es zeigen:
- Figur 1:: eine schematische Seitenansicht eines erfindungsgemäßen Bodenbearbeitungssystems beim Andocken einer Bodenbearbeitungseinheit an eine zentrale Ladestation;
- Figur 2:: eine schematische Längsschnittansicht des Bodenbearbeitungssystems gemäß Figur 1;
- Figur 3:: eine Vorderansicht auf die zentrale Ladestation des Bodenbearbeitungssystems;
- Figur 4:: eine Teilschnittansicht längs der Linie 4-4 in Figur 3 und
- Figur 5:: eine Teilschnittansicht längs der Linie 5-5 in Figur 3.

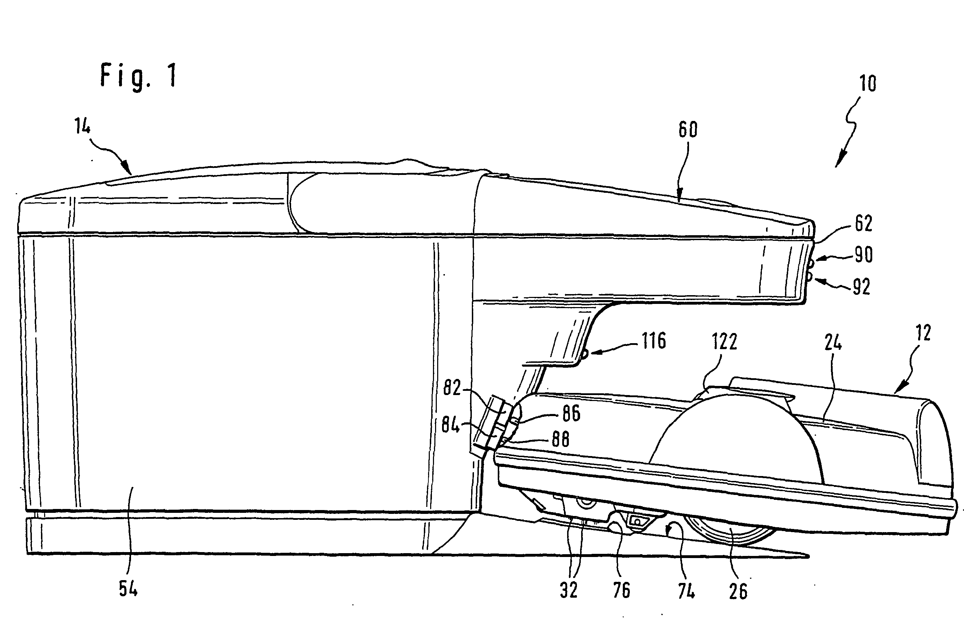

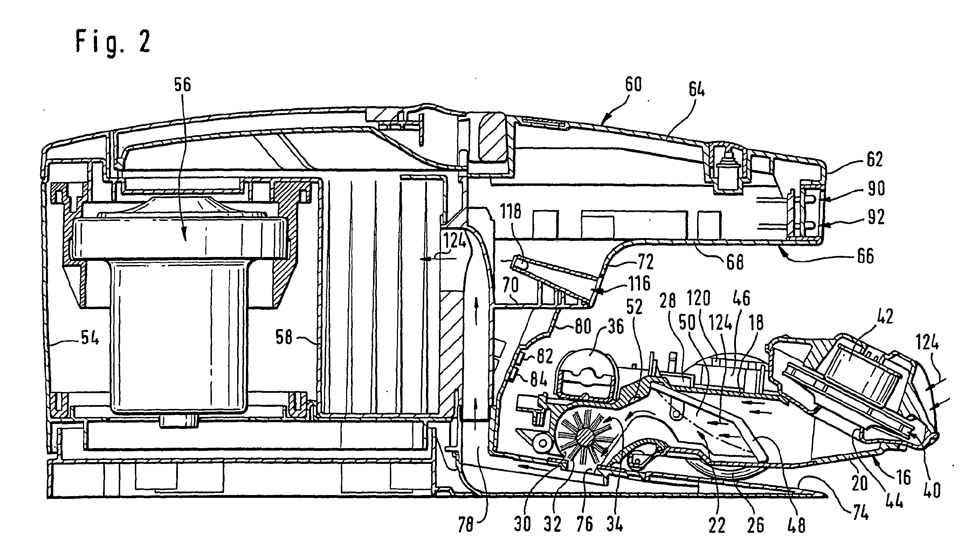

In den Figuren 1 und 2 ist schematisch ein erfindungsgemäßes Bodenbearbeitungssystem in Form eines insgesamt mit dem Bezugszeichen 10 belegten Bodenreinigungssystems dargestellt. Das Bodenreinigungssystem 10 umfaßt eine mobile Bodenbearbeitungseinheit in Form eines selbstfahrenden und selbststeuernden Sauggerätes 12 sowie eine zentrale Ladestation 14.

Das Sauggerät 12 weist ein Gehäuse 16 auf mit einer Deckenwand 18 und einer Bodenwand 20, die zwischen sich einen Saugkanal 22 definieren. Auf die Deckenwand 18 ist ein in Figur 2 zur Erzielung einer besseren Übersichtlichkeit nicht dargestellter Deckel 24 aufgesetzt. Das Gehäuse 16 bildet ein Fahrwerk aus, an dem in an sich bekannter und deshalb in der Zeichnung nur schematisch dargestellter Weise zwei Antriebsräder 26 drehbar gelagert sind, denen jeweils ein an sich bekannter elektrischer Antriebsmotor (nicht dargestellt) zugeordnet ist. Die Steuerung der Antriebsmotoren erfolgt mittels einer an sich bekannten und in Figur 2 blockschaltartig dargestellten elektronischen Steuerung 28, die mit den Antriebsmotoren über in der Zeichnung nicht dargestellte Steuerleitungen verbunden ist.

Die Bodenwand 20 weist in einem vorderen, der Ladestation 14 zugewandten Bereich einen Saugeinlaß 30 auf, der von Kehrbürsten 32 einer oberhalb des Saugeinlasses 30 drehbar gelagerten Bürstenwalze 34 durchgriffen wird. Die Bürstenwalze 34 ist mittels eines Elektromotors 36 drehend antreibbar, der oberhalb der Bürstenwalze 34 auf der Deckenwand 18 aufsitzt und über an sich bekannte und deshalb in der Zeichnung nicht dargestellte Getriebemittel mit der Bürstenwalze 34 gekoppelt ist.

In seinem der Ladestation 14 abgewandten rückwärtigen Bereich trägt das Gehäuse 16 eine Saugturbine 40, die von einem elektrischen Antriebsmotor 42 drehend antreibbar ist und über einen Ansaugstutzen 44 mit dem Saugkanal 22 in Strömungsverbindung steht.

Die Energieversorgung der elektrischen Verbraucher des Sauggerätes 12 erfolgt mittels einer wiederaufladbaren Energieversorgungseinheit in Form einer wiederaufladbaren Batterie 46, die von der Deckenwand 18 getragen und schematisch in Figur 2 dargestellt ist.

Innerhalb des Saugkanales 22 ist ein Schmutzfilter 48 angeordnet, und der Bereich des Saugkanales 22 zwischen dem Schmutzfilter 48 und dem Saugeinlaß 30 bildet einen Schmutzsammelbehälter 50, dessen Füllstand von einem Füllstandsensor 52 überwacht wird, der mit der Steuerung 28 in elektrischer Verbindung steht.

Zur Reinigung einer Bodenfläche wird von der Saugturbine 40 eine Saugströmung erzeugt, mit deren Hilfe Schmutz von der Bodenfläche durch den Saugeinlaß 30 hindurch in den Schmutzsammelbehälter 50 überführt werden kann. Die Schmutzaufnahme von der Bodenfläche wird durch die Bürstenwalze 34 unterstützt. Das Sauggerät 12 fährt hierbei selbsttätig solange entsprechend einem vorgegebenen Steuerprogramm an der zu reinigenden Bodenfläche entlang, bis der von der Steuerung 28 überwachte Ladezustand der Batterie 46 einen vorgegebenen unteren Grenzwert unterschreitet oder vom Füllstandsensor 52 erkannt wird, daß der Schmutzsammelbehälter 50 voll ist. Ist mindestens eine dieser Bedingungen erfüllt, so steuert das Sauggerät 12 selbsttätig die Ladestation 14 an, an der die Batterie 46 aufgeladen und der Schmutzsammelbehälter 50 entleert werden kann.

Die Ladestation 14 weist ein Gehäuse 54 auf, das ein Absaugaggregat 56 sowie einen Schmutzaufnahmebehälter 58 umgibt, der vom Absaugaggregat 56 mit einem Unterdruck beaufschlagt werden kann.

Am Gehäuse 54 der Ladestation 14 ist ein Ausleger 60 seitlich gehalten, der an seinem dem Gehäuse 54 abgewandten Ende eine Stirnwand 62 aufweist, die über eine Abdeckung 64 sowie eine Tragplatte 66 mit dem Gehäuse 54 verbunden ist. Die Tragplatte 66 ist hierbei stufig ausgebildet und umfaßt einen der Stirnwand 62 zugewandten vorderen Tragplattenabschnitt 68. und einen dem Gehäuse 54 zugewandten hinteren Tragplattenabschnitt 70, die über eine schräg verlaufende Stufe 72 einstückig miteinander verbunden sind.

In vertikaler Richtung unterhalb der Tragplatte 66 und im Abstand zu dieser ist an das Gehäuse 54 eine Rampe 74 angeformt, die eine Absaugöffnung 76 aufweist. Letztere ist über einen Absaugkanal 78 mit dem Schmutzaufnahmebehälter 58 verbunden.

Zwischen dem dem Gehäuse 54 zugewandten Ende der Rampe 74 und dem hinteren Tragplattenabschnitt 70 ist eine Stützwand 80 angeordnet, die zwei elektrische Kontaktelemente 82, 84 trägt. Die Ladestation 14 umfaßt ein an sich bekanntes und deshalb in der Zeichnung nicht dargestelltes Ladegerät, das an eine Netzspannung anschließbar und über in der Zeichnung nicht dargestellte Zuleitungen mit den elektrischen Kontaktelementen 82 und 84 verbunden ist.

Den elektrischen Konaktelementen 82 und 84 der Ladestation 14 zugeordnet sind an der Außenseite des Deckels 24 des Sauggerätes 12 zwei in Figur 1 schematisch dargestellte elektrische Kontaktstifte 86, 88 gehalten, die über in der Zeichnung nicht dargestellte Verbindungsleitungen mit der wiederaufladbaren Batterie 46 in Verbindung stehen. Über die elektrischen Kontaktelemente 82, 84 und die zugeordneten elektrischen Kontaktstifte 86 bzw. 88 kann elektrische Energie von der Ladestation 14 auf das Sauggerät 12 übertragen werden zum Aufladen der Batterie 46.

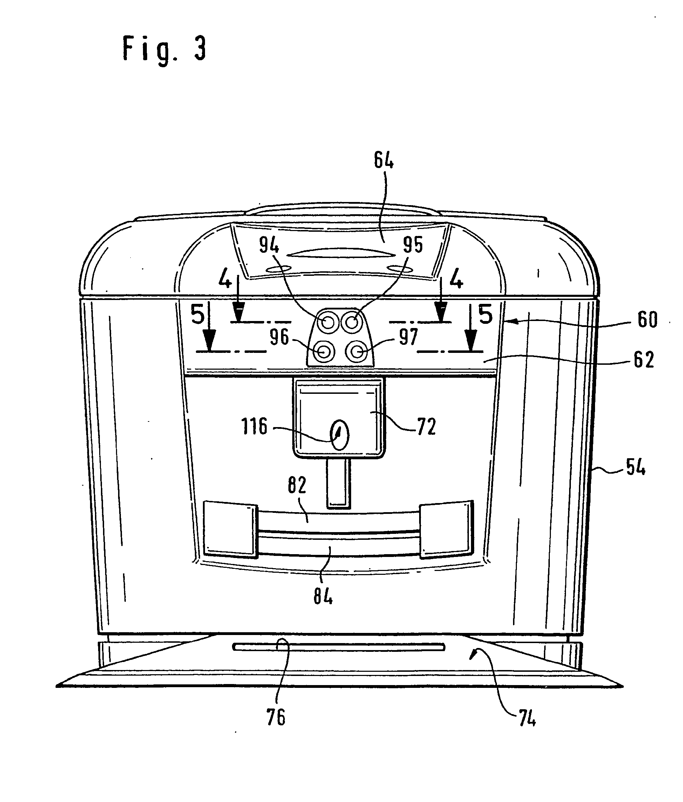

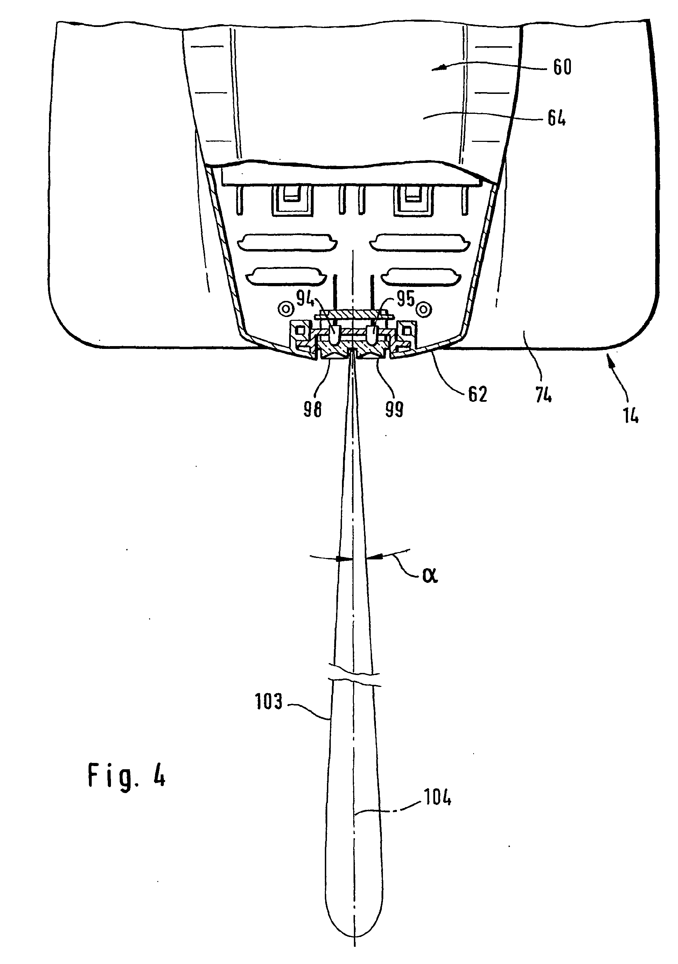

An der Stirnwand 62 der Ladestation 14 sind in vertikaler Richtung übereinander eine erste Sendeeinheit 90 und eine zweite Sendeeinheit 92 gehalten, die jeweils zwei infrarotlichtemittierende Dioden 94, 95 bzw. 96, 97 umfassen, dies wird insbesondere aus den Figuren 3, 4 und 5 deutlich. Den Dioden 94, 95, 96, 97 ist jeweils ein optisches Umlenk- und Fokusierungselement 98, 99, 100 bzw. 101 vorgeschaltet, wobei die beiden optischen Elemente 98, 99 der ersten Sendeeinheit 90 ebenso wie die beiden optischen Elemente 100 und 101 der zweiten Sendeeinheit 92 jeweils einstückig miteinander verbunden sind. Von der ersten Sendeeinheit 90 und der zweiten Sendeeinheit 92 wird jeweils Infrarotstrahlung ausgesandt. Die von der ersten Sendeeinheit 90 ausgesandte Infrarotstrahlung bildet hierbei ein in Figur 4 schematisch dargestelltes Fernfeld 103 aus, das keulenförmig ausgebildet ist und eine Symmetrieachse 104 aufweist. Das Fernfeld 103 hat eine Reichweite von etwa 8 bis 12 m und wird durch die Überlagerung der von den beiden infrarotlichtemittierenden Dioden 94, 95 der ersten Sendeeinheit 90 ausgesandten Infrarotstrahlung gebildet. Das Fernfeld 103 ist auf einen verhältnismäßig schmalen räumlichen Bereich konzentriert, der Öffnungswinkel α des keulenförmigen Fernfeldes 103 bezogen auf die Symmetrieachse 104 beträgt 4,5°. Die Symmetrieachse 104 ist unter einem Winkel von etwa 1° schräg zur Horizontalen nach unten gerichtet.

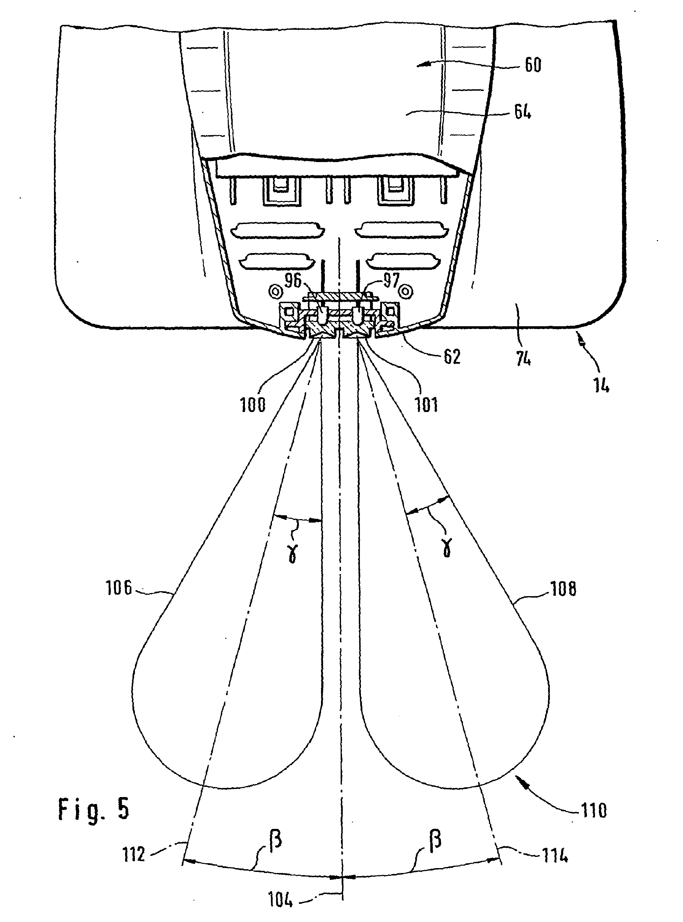

Die von den beiden Dioden 96 und 97 der zweiten Sendeeinheit 92 ausgesandte Infrarotstrahlung bildet jeweils einen in Figur 5 dargestellten keulenförmigen Feldbereich 106 bzw. 108, die in ihrer Gesamtheit ein Nahfeld 110 der von der zweiten Sendeeinheit 92 ausgesandten Infrarotstrahlung definieren. Die beiden keulenförmigen Feldbereiche 106 und 108 weisen jeweils eine Symmetrieachse 112 bzw. 114 auf, die bezogen auf die in Figur 5 gestrichelt dargestellte Symmetrieachse 104 des Fernfeldes 103 spiegelsymmetrisch zueinander ausgerichtet sind, wobei sie mit der Symmetrieachse 104 jeweils einen Neigungswinkel β von 15° ausbilden. Der Öffnungswinkel γ der keulenförmigen Feldbereiche 106 und 108 bezogen auf die jeweilige Symmetrieachse 112 bzw. 114 beträgt jeweils ebenfalls 15°. Die Reichweite des Nahfeldes 110 beträgt ca. 1,5 bis 4,5 m, die Symmetrieachsen 112 und 114 der Feldbereiche 106 bzw. 108 sind jeweils unter einem Winkel von ca. 5° zur Horizontalen schräg nach unten gerichtet.

Zusätzlich zur ersten Sendeeinheit 90 und zur zweiten Sendeeinheit 92 umfaßt die Ladestation 14 eine an der Stufe 72 gehaltene dritte Sendeeinheit 116, die eine einzige infrarotlichtemittierende Diode 118 aufweist, wobei dieser Diode 118 kein optisches Umlenk- oder Fokusierungselement zugeordnet ist. Die von der infrarotlichtemittierenden Diode 118 ausgesandte Infrarotstrahlung ist in den Bereich zwischen den Ausleger 60 und die Rampe 74 gerichtet.

Zum Empfang der von den ersten, zweiten und dritten Sendeeinheit 90, 92, 116 ausgesandten infraroten Zielstrahlung umfaßt das Sauggerät 12 zwei nach vorne gerichtete infrarotlichtempfindliche Sensoren 120, die mit der Steuerung 28 des Sauggerätes 12 gekoppelt sind. Damit die von den Sendeeinheiten 90, 92 und 116 ausgesandte infrarote Zielstrahlung praktisch ungehindert auf die infrarotlichtempfindliche Sensoren 120 auftreffen kann, umfaßt der Deckel 24 des Sauggerätes 12 jeweils einem Sensor 120 zugeordnet ein für Infrarotlicht transparentes Fenster 122. Zusätzlich kommen zwei in der Zeichnung nicht dargestellte, jeweils oberhalb eines Antriebrades positionierte Sensoren zum Einsatz, die nach hinten gerichtet sind.

Wird von der Steuerung 28 des Sauggerätes 12 bei seiner Fahrt entlang der zu reinigenden Bodenfläche erkannt, daß der Ladezustand der Batterie 46 einen unteren Grenzwert unterschreitet oder daß der Schmutzsammelbehälter 50 voll ist, so richtet sich das Sauggerät 12 entsprechend der von den Sendeeinheiten 90, 92, 116 ausgesandten Zielstrahlung aus und steuert selbsttätig die Ladestation 14 an. Im Bereich der Ladestation 14 wird das Sauggerät 12 mittels der von der dritten Sendeeinheit 116 bereitgestellten Infrarotstrahlung, die im Bereich der Rampe 74 ein infrarotes Führungsfeld ausbildet, zuverlässig zur Rampe 74 geführt, so daß das Sauggerät 12 soweit auf die Rampe 74 auffährt, bis die elektrischen Kontaktstifte 86 und 88 des Sauggerätes 12 mit den elektrischen Kontaktelementen 82 und 84 der Ladestation 14 in mechanischen und elektrischen Kontakt gelangen, so daß ein Ladestrom zur Batterie 46 fließen kann. Das Sauggerät 12 nimmt hierbei auf der Rampe 74 eine derartige Stellung ein, daß die Absaugöffnung 76 fluchtend zum Saugeinlaß 30 ausgerichtet ist. Sobald über die elektrischen Kontaktelemente 82 und 84 ein Ladestrom fließt, wird das Absaugaggregat 56 in Gang gesetzt, so daß durch den Saugkanal 22 des Sauggerätes 12 sowie den Absaugkanal 78 der Ladestation 14 hindurch eine Absaugströmung sich ausbildet, die in Figur 2 schematisch durch die Pfeile 124 veranschaulicht ist und folglich gleichzeitig mit dem Wiederaufladen der Batterie 46 der Schmutzsammelbehälter 50 entleert wird.

## Patentansprüche

1. Bodenbearbeitungssystem mit einer selbstfahrenden und selbststeuernden Bodenbearbeitungseinheit, die ein elektrisch angetriebenes Bodenbearbeitungsaggregat sowie eine wiederaufladbare Energieversorgungseinheit und eine elektrische Steuerung umfaßt, und mit einer zentralen Ladestation zum Wiederaufladen der Energieversorgungseinheit, wobei die Ladestation eine Sendevorrichtung zum Aussenden einer infraroten Zielstrahlung aufweist und wobei die Zielstrahlung von einer Empfangsvorrichtung der Bodenbearbeitungseinheit richtungsabhängig erfaßbar ist zum selbsttätigen Ausrichten und Positionieren der Bodenbearbeitungseinheit an der Ladestation, **dadurch gekennzeichnet, daß** die Sendevorrichtung eine erste Sendeeinheit (90) zur Ausbildung eines Fernfeldes (103) der Zielstrahlung sowie eine zweite Sendeeinheit (92) zur Ausbildung eines Nahfeldes (110) der Zielstrahlung aufweist, wobei sich das Nahfeld (110) ausgehend von der Ladestation (14) über einen breiteren und kürzeren Bereich erstreckt als das Fernfeld.

2. Bodenbearbeitungssystem nach Anspruch 1, **dadurch gekennzeichnet, daß** das Fernfeld (103) keulenförmig ausgestaltet ist.

3. Bodenbearbeitungssystem nach Anspruch 1 oder 2, **dadurch gekennzeichnet, daß** die erste Sendeeinheit (90) mindestens zwei Sendeelemente (94, 95) aufweist, deren ausgesandte Infrarotstrahlung sich gegenseitig überlagert.

4. Bodenbearbeitungssystem nach Anspruch 3, **dadurch gekennzeichnet, daß** den Sendeelementen (94, 95) der ersten Sendeeinheit (90) ein optisches Element (98, 99) zur Strahlführung zugeordnet ist.

5. Bodenbearbeitungssystem nach einem der voranstehenden Ansprüche, **dadurch gekennzeichnet, daß** das Nahfeld (110) zumindest zwei nebeneinander angeordnete Feldbereiche (106, 108) aufweist.

6. Bodenbearbeitungssystem nach Anspruch 5, **dadurch gekennzeichnet, daß** die Feldbereiche (106, 108) keulenförmig ausgestaltet sind und jeweils eine Symmetrieachse (112, 114) aufweisen.

7. Bodenbearbeitungssystem nach Anspruch 5 oder 6, **dadurch gekennzeichnet, daß** die Feldbereiche (106, 108) spiegelsymmetrisch zu einer Symmetrieachse (104) des Fernfeldes (103) ausgerichtet sind.

8. Bodenbearbeitungssystem nach Anspruch 6 oder 7, **dadurch gekennzeichnet, daß** die Symmetrieachsen (112, 114) von zwei Feldbereichen (106, 108) jeweils in einem Winkel (β) von ca. 10° bis etwa 20° zur Symmetrieachse (104) des Fernfeldes (103) geneigt sind.

9. Bodenbearbeitungssystem nach einem der voranstehenden Ansprüche, **dadurch gekennzeichnet, daß** die zweite Sendeeinheit (92) zumindest zwei Sendeelemente (96, 97) aufweist, wobei die von den Sendeelementen (96, 97) ausgesandte Infrarotstrahlungen in unterschiedliche Richtungen ausgerichtet sind.

10. Bodenbearbeitungssystem nach Anspruch 9, **dadurch gekennzeichnet, daß** die von den Sendeelementen (96, 97) der zweiten Sendeeinheit (92) ausgesandten Infrarotstrahlungen jeweils einen Feldbereich (106, 108) des Nahfeldes (110) ausbilden.

11. Bodenbearbeitungssystem nach einem der voranstehenden Ansprüche, **dadurch gekennzeichnet, daß** die Sendeelemente der ersten und/oder zweiten Sendeeinheit (90, 92) als infrarotlichtemittierende Dioden (94, 95, 96, 97) ausgestaltet sind.

12. Bodenbearbeitungssystem nach Anspruch 11, **dadurch gekennzeichnet, daß** die jeweils einer Sendeeinheit (90, 92) zugeordneten infrarotlichtemittierenden Dioden (94, 95; 96, 97) parallel zueinander ausgerichtet sind und daß den Dioden (94, 95; 96, 97) jeweils ein optisches Element (98, 99, 100, 101) vorgeschaltet ist zur Fokusierung und/oder Umlenkung der emittierten Infrarotstrahlung.

13. Bodenbearbeitungssystem nach einem der voranstehenden Ansprüche, **dadurch gekennzeichnet, daß** die Ladestation (14) eine dritte Sendeeinheit (116) aufweist zur Ausbildung eines Führungsfeldes der Zielstrahlung zur Führung der Bodenbearbeitungseinheit (12) beim Andocken an die Ladestation (14).

14. Bodenbearbeitungssystem nach Anspruch 13, **dadurch gekennzeichnet, daß** die dritte Sendeeinheit (116) ein einziges Sendeelement (118) aufweist, wobei beim Andocken der Bodenbearbeitungseinheit (12) an der Ladestation (14) eine Sichtverbindung zwischen dem Sendeelement (118) und der Empfangsvorrichtung (120) der Bodenbearbeitungseinheit (12) besteht.

15. Bodenbearbeitungssystem nach Anspruch 14, **dadurch gekennzeichnet, daß** das Sendeelement der dritten Sendeeinheit (116) als infrarotlichtemittierende Diode (118) ausgebildet ist.

16. Bodenbearbeitungssystem nach einem der voranstehenden Ansprüche, **dadurch gekennzeichnet, daß** die Empfangsvorrichtung zumindest zwei infrarotlichtempfindliche Sensoren (120) aufweist, die in einem mittigen Bereich der Bodenbearbeitungseinheit (12) angeordnet sind.

17. Bodenbearbeitungssystem nach einem der voranstehenden Ansprüche, **dadurch gekennzeichnet, daß** die Bodenbearbeitungseinheit ein Sauggerät (12) ausbildet mit einem einen Saugeinlaß (30) aufweisenden Schmutzsammelbehälter (50) und einer Saugturbine (38), und daß die zentrale Ladestation (14) ein Absaugaggregat (56) sowie ein Schmutzaufnahmebehälter (58) aufweist, wobei der Schmutzsammelbehälter (50) über den Saugeinlaß (30) vom Absaugaggregat (56) absaugbar und gleichzeitig die Energieversorgungseinheit (46) von der Ladestation (14) wiederaufladbar ist.

## Claims

1. Floor treatment system with a self-propelled and self-steering floor treatment unit, which comprises an electrically driven floor treatment assembly and also a rechargeable power supply unit and an electrical control system, and with a central charging station for recharging the power supply unit, the charging station having a transmitting device for emitting an infrared target radiation, and it being possible for the target radiation to be sensed in a directionally dependent manner by a receiving device of the floor treatment unit for the automatic alignment and positioning of the floor treatment unit at the charging station, **characterized in that** the transmitting device has a first transmitting unit (90) for the formation of a far field (103) of the target radiation and a second transmitting unit (92) for the formation of a near field (110) of the target radiation, the near field (110) extending over a wider and shorter area from the charging station (14) than the far field.

2. Floor treatment system according to Claim 1, **characterized in that** the far field (103) is configured in a lobar manner.

3. Floor treatment system according to Claim 1 or 2, **characterized in that** the first transmitting unit (90) has at least two transmitting elements (94, 95), the emitted infrared radiation of which is superposed on one another.

4. Floor treatment system according to Claim 3, **characterized in that** the transmitting elements (94, 95) of the first transmitting unit (90) have an associated optical element (98, 99) for beam guidance.

5. Floor treatment system according to one of the preceding claims, **characterized in that** the near field (110) has at least two field regions (106, 108) disposed beside one another.

6. Floor treatment system according to Claim 5, **characterized in that** the field regions (106, 108) are configured in a lobar manner and in each case have an axis of symmetry (112, 114).

7. Floor treatment system according to Claim 5 or 6, **characterized in that** the field regions (106, 108) are aligned mirror-symmetrically in relation to an axis of symmetry (104) of the far field (103).

8. Floor treatment system according to Claim 6 or 7, **characterized in that** the axes of symmetry (112, 114) of two field regions (106, 108) are each inclined at an angle (β) of approximately 10° to approximately 20° to the axis of symmetry (104) of the far field (103).

9. Floor treatment system according to one of the preceding claims, **characterized in that** the second transmitting unit (92) has at least two transmitting elements (96, 97), the infrared radiations emitted by the transmitting elements (96, 97) being aligned in different directions.

10. Floor treatment system according to Claim 9, **characterized in that** the infrared radiations emitted by the transmitting elements (96, 97) of the second transmitting unit (92) form in each case a field region (106, 108) of the near field (110).

11. Floor treatment system according to one of the preceding claims, **characterized in that** the transmitting elements of the first and/or second transmitting unit (90, 92) are configured as infrared-emitting diodes (94, 95, 96, 97).

12. Floor treatment system according to Claim 11, **characterized in that** the infrared-emitting diodes (94, 95; 96, 97) respectively associated with a transmitting unit (90, 92) are aligned parallel to one another, and **in that** the diodes (94, 95; 96, 97) are in each case preceded by an optical element (98, 99, 100, 101) for focusing and/or deflecting the emitted infrared radiation.

13. Floor treatment system according to one of the preceding claims, **characterized in that** the charging station (14) has a third transmitting unit (116) for the formation of a guiding field of the target radiation for guiding the floor treatment unit (12) during docking onto the charging station (14).

14. Floor treatment system according to Claim 13, **characterized in that** the third transmitting unit (116) has a single transmitting element (118), a visual link existing between the transmitting element (118) and the receiving device (120) of the floor treatment unit (12) during the docking of the floor treatment unit (12) onto the charging station (14).

15. Floor treatment system according to Claim 14, **characterized in that** the transmitting element of the third transmitting unit (116) is formed as an infrared-emitting diode (118).

16. Floor treatment system according to one of the preceding claims, **characterized in that** the receiving device has at least two infrared-sensitive sensors (120), which are disposed in a central region of the floor treatment unit (12).

17. Floor treatment system according to one of the preceding claims, **characterized in that** the floor treatment unit forms a suction device (12) with a dirt collecting container (50) having a suction inlet (30) and with a suction turbine (38), and **in that** the central charging station (14) has a suction-extraction assembly (56) and also a dirt receiving container (58), it being possible for the dirt collecting container (50) to be emptied by the suction-extraction assembly (56) via the suction inlet (30) and at the same time the power supply unit (46) to be recharged by the charging station (14).

## Revendications

1. Système de traitement de sol, équipé d'une unité de traitement de sol automotrice et autonome, qui comporte un groupe de traitement de sol entraîné électriquement ainsi qu'une unité d'alimentation en énergie qui est rechargeable et une commande électrique, et d'une station de charge centrale pour recharger l'unité d'alimentation en énergie, ladite station de charge comportant un dispositif d'émission destiné à envoyer un rayonnement de pointage infrarouge, et le rayonnement de pointage pouvant être détecté par un dispositif de réception de l'unité de traitement de sol en fonction de la direction pour orienter et positionner automatiquement l'unité de traitement de sol au niveau de la station de charge, **caractérisé en ce que** le dispositif d'émission comporte une première unité d'émission (90) destinée à former un champ lointain (103) du rayonnement de pointage ainsi qu'une deuxième unité d'émission (92) destinée à former un champ proche (110) du rayonnement de pointage, le champ proche (110) s'étendant à partir de la station de charge (14) sur une zone plus large et plus courte que celle du champ lointain.

2. Système de traitement de sol selon la revendication 1, **caractérisé en ce que** le champ lointain (103) a une forme de lobe.

3. Système de traitement de sol selon la revendication 1 ou 2, **caractérisé en ce que** la première unité d'émission (90) comporte au moins deux éléments d'émission (94, 95), dont les rayonnements infrarouges émis se superposent.

4. Système de traitement de sol selon la revendication 3, **caractérisé en ce qu'**un élément optique (98, 99) destiné à guider le rayonnement est associé aux éléments d'émission (94, 95) de la première unité d'émission (90).

5. Système de traitement de sol selon l'une des revendications précédentes, **caractérisé en ce que** le champ proche (110) comporte au moins deux zones de champ (106, 108) disposées l'une à côté de l'autre.

6. Système de traitement de sol selon la revendication 5, **caractérisé en ce que** les zones de champ (106, 108) ont une forme de lobe, et possèdent chacune un axe de symétrie (112, 114).

7. Système de traitement de sol selon la revendication 5 ou 6, **caractérisé en ce que** les zones de champ (106, 108) sont orientées en symétrie miroir par rapport à un axe de symétrie (104) de la zone de champ (103).

8. Système de traitement de sol selon la revendication 6 ou 7, **caractérisé en ce que** les axes de symétrie (112, 114) des deux zones de champ (106, 108) sont chacun inclinés selon un angle (β), d'environ 10° à environ 20°, par rapport à l'axe de symétrie (104) du champ lointain (103).

9. Système de traitement de sol selon l'une des revendications précédentes, **caractérisé en ce que** la deuxième unité d'émission (92) comporte au moins deux éléments d'émission (96, 97), les rayonnements infrarouges émis par les éléments d'émission (96, 97) étant orientés dans des directions différentes.

10. Système de traitement de sol selon la revendication 9, **caractérisé en ce que** les rayonnements infrarouges émis par les éléments d'émission (96, 97) de la deuxième unité d'émission (92) forment chacun une zone de champ (106, 108) du champ proche (110).

11. Système de traitement de sol selon l'une des revendications précédentes, **caractérisé en ce que** les éléments d'émission des première et/ou deuxième unités d'émission (90, 92) se présentent sous la forme de diodes (94, 95, 96, 97) émettant de la lumière infrarouge.

12. Système de traitement de sol selon la revendication 11, **caractérisé en ce que** les diodes (94, 95 ; 96, 97) émettant de la lumière infrarouge, qui sont associées chacune à une unité d'émission (90, 92), sont orientées parallèlement l'une à l'autre, et **en ce qu'**un élément optique (98, 99, 100, 101) est interposé devant chacune des diodes (94, 95 ; 96, 97) pour focaliser et/ou dévier le rayonnement infrarouge émis.

13. Système de traitement de sol selon l'une des revendications précédentes, **caractérisé en ce que** la station de charge (14) comporte une troisième unité d'émission (116) destinée à former un champ de guidage du rayonnement de pointage, afin de guider l'unité de traitement de sol (12) lors de l'accostage à la station de charge (14).

14. Système de traitement de sol selon la revendication 13, **caractérisé en ce que** la troisième unité d'émission (116) comporte un unique élément d'émission (118), une liaison visible entre l'élément d'émission (118) et le dispositif de réception (120) de l'unité de traitement de sol (12) étant présente lors de l'accostage de l'unité de traitement de sol (12) à la station de charge (14).

15. Système de traitement de sol selon la revendication 14, **caractérisé en ce que** l'élément d'émission de la troisième unité d'émission (116) se présente sous la forme d'une diode (118) émettant de la lumière infrarouge.

16. Système de traitement de sol selon l'une des revendications précédentes, **caractérisé en ce que** le dispositif de réception comporte au moins deux capteurs (120), sensibles à la lumière infrarouge, qui sont disposés dans une zone médiane de l'unité de traitement de sol (12).

17. Système de traitement de sol selon l'une des revendications précédentes, **caractérisé en ce que** l'unité de traitement de sol forme un aspirateur (12) doté d'un récipient de collecte de souillures (50) présentant une entrée d'aspiration (30), et d'une turbine d'aspiration (38), et **en ce que** la station de charge centrale (14) comporte un aspirateur (56) ainsi qu'un récipient de réception de souillures (58), le récipient de collecte de souillures (50) pouvant être vidé par aspiration, via l'entrée d'aspiration (30), par l'aspirateur (56), et l'unité d'alimentation en énergie (46) pouvant être en même temps rechargée par la station de charge (14).
